# EUROPÄISCHE PATENTSCHRIFT

(11) **EP 0 623 393 B1**
(45) Veröffentlichungstag und Bekanntmachung des Hinweises auf die Patenterteilung: **12.11.1997**
(21) Anmeldenummer: 94103159.3
(22) Anmeldetag: 03.03.1994
(51) Int. Cl.: B05B 15/12, B05B 15/04, B65G 45/14

(54) **Farbspritzanlage**
Paint spraying installation
Installation de projection de peinture

(30) Priorität: 06.04.1993 DE 4311310
(43) Veröffentlichungstag der Anmeldung: 09.11.1994
(73) Patentinhaber: VENJAKOB MASCHINENBAU GmbH & Co.KG, D-33378 Rheda-Wiedenbrück (DE)
(72) Erfinder: Potthoff, Bernhard, D-33442 Herzebrock-Clarholz (DE)
(74) Vertreter: Stracke, Alexander, Dipl.-Ing.

(56) Entgegenhaltungen:
- EP-A- 0 425 969
- EP-A- 0 448 080
- EP-A- 0 571 697
- WO-A-91/07234
- WO-A-94/02254
- FR-A- 1 420 666
- FR-A- 2 281 153
- US-A- 4 155 442
- US-A- 4 888 200

## Beschreibung

Die vorliegende Erfindung betrifft eine Farbspritzanlage gemäß dem Oberbegriff des Anspruches 1.

Bei der in Rede stehenden Farbspritzanlage werden die auf dem Obertrum des Bandförderers aufliegenden Werkstücke kontinuierlich durch die Spitzkabine transportiert. Zumindest in diesem Bereich ist der Bandförderer ein Horizontalförderer. Die zu behandelnden Werkstücke werden mittels der gesteuerten Farbspritzpistolen mit einer Lack- oder Farbbeschichtung versehen. Es ergibt sich nun zwangsläufig, daß die freien Flächen, d. h. die Flächen, die nicht von den Werkstücken abgedeckt werden, durch einen Farb- oder Lackauftrag verschmutzt werden. In der Fachwelt wird dieser Vorgang als Overspray bezeichnet. Es ist demzufolge notwendig, daß die Oberfläche des Fördergurtes des Bandförderers gereinigt wird, sobald die Werkstücke abgenommen wurden. Hierbei ist gleichzeitig die Möglichkeit zur Rückgewinnung des überschüssigen Lack- oder Farbmaterials gegeben.

Aus der EP 0 425 969 A1 ist eine Reinigungseinrichtung für den Bandförderer einer in Rede stehenden Farbspritzanlage bekannt. Die Reinigungseinrichtung ist im Bereich, in Laufrichtung des Obertrums des Bandförderers gesehen, hinteren Umlenkwalze und unterhalb dieser angeordnet. Sie besteht im wesentlichen aus einer Rakelwalze, die mit einer gegenüber der Umlenkwalze höheren Drehzahl und in entgegengesetzter Drehrichtung angetrieben wird. Die Rakelwalze steht achsparallel zu dieser Umlenkwalze. Durch die Rakelwalze soll die auf der Außenseite des Fördergurtes beim Spritzen der Werkstücke aufgetragene Farb- oder Lackschicht abgetragen werden. Diese Rakeleinrichtung steht in einem verhältnismäßig großen Abstand zur Auslaufseite der Spritzkabine, da es erforderlich ist, im rücklaufenden Untertrum des Bandförderers zur vollständigen Reinigung außer der Rakelwalze weitere Reinigungsvorrichtungen vorzusehen, die einen entsprechenden Bauraum beanspruchen, um den der Obertrum ebenfalls verlängert werden muß, da alle Reinigungsvorrichtungen außerhalb der Spritzkabine angeordnet werden müssen. Da die Lack- oder Farbschicht des Fördergurtes während dieser Zeit trocknet, ist eine Reinigung und Rückgewinnung um so schwieriger, je schneller das Farbmaterial für die Trocknung eingestellt ist, und je feiner die Zerstäubung des Oversprays stattgefunden hat. In beiden Fällen müssen relativ trockene Farbmengen vom Bandförderer entfernt werden. Entsprechend größerer Aufwand muß bei den nachgeschalteten Reinigungseinrichtungen betrieben werden mit relativ hohem Verbrauch an Zusatz-Lösungsmitteln. Ferner ist bei dieser vorbekannten Reinigungsvorrichtung nachteilig, daß die Wartungsarbeiten mühsam durchgeführt werden müssen, da sich die Reinigungseinrichtung unterhalb des Bandförderers befindet. Dieser Nachteil kann nur durch entsprechend hohen technischen Aufwand in der Konstruktion ausgeglichen werden, indem diese Einrichtungen aus dem Arbeitsbereich absenkbar und vollständig herausfahrbar vorgesehen werden, damit sie für die tägliche Reinigung und Wartung zugänglich werden. Da die Berührung des Fördergurtes mit der Rakelwalze als linienförmige Berührung angesehen werden kann, ist die Reinigung unzureichend, so daß eine Nach- oder Feinstreinigung der Oberfläche des Fördergurtes notwendig ist. Da das von der Rakelwalze abgenommene Lackmaterial über die gesamte Arbeitsbreite verteilt in eine Sammelrinne läuft, muß es zur Verhinderung weiterer Antrocknung durch eine weitere, zyklisch linear bewegte Schieberrakel seitlich zur Abnahmestelle befördert werden. Dadurch ist der konstruktive Aufwand, in der Gesamtheit gesehen, äußerst hoch.

Es sind weiterhin Lösungen bekannt, die mit festen Rakeleinrichtungen in schräg zur Laufrichtung angeordneten Rakeln eine Lackspur auf Bändern bilden, die dann an geeigneter Stelle abgenommen wird.

Nachteilig bei dieser sehr einfachen Lösung ist, daß sich das Lackmaterial bei langsamer Bandgeschwindigkeit vor den Rakeln staut, sowie kleine Feststoffpartikel sich zwischen Rakel und Bandoberfläche festsetzen und Beschädigungen der Bandoberfläche in Form von Kratzern hervorrufen.

Das Stauen des Materials vor den Rakeln kann durch relativ hohe Bandgeschwindigkeit beseitigt werden, die Kratzerbildung jedoch nicht. Die relativ hohe Bandgeschwindigkeit kann nur im Falle getrennter Förderer für die Werkstücke und für das aufgefangene Lackmaterial realisiert werden. Dieses bewirkt wiederum einen hohen technischen Aufwand, sowie entsprechenden Lösungsmittelbedarf in ungewünschter Größenordnung.

Der vorliegenden Erfindung liegt die Aufgabe zugrunde, eine Farbspritzanlage der eingangs beschriebenen Art so auszubilden, daß in konstruktiv einfacher Weise die Wirkung der Rakeleinrichtung zur Reinigung der Oberfläche des Fördergurtes verbessert wird. Insbesondere soll die benötigte Menge des Lösungsmittels deutlich geringer sein als bei der vorbekannten Rakeleinrichtung. Ferner soll die Rakeleinrichtung zur Wartung einfach zugänglich sein.

Die gestellte Aufgabe wird bei einer Farbspritzanlage mit den Merkmalen des Oberbegriffs des Anspruches 1, bzw. des Anspruchs 18, durch die im Kennzeichen des Anspruches 1, bzw. des Anspruchs 18, aufgeführten Merkmale gelöst.

Da nunmehr die Rakeleinrichtung eine angetriebene Ringrakel als Hauptfunktionsteil beinhaltet, wird gegenüber dem Stand der Technik eine zeitlich frühere Abnahme des Lackmaterials vom Fördergurt erreicht, wobei das Material noch entsprechend feucht ist. Ferner wird trotz der relativ geringen Geschwindigkeit des Fördergurtes entsprechend der Arbeitsgeschwindigkeit des Spritzautomaten das Lackmaterial ohne Staueffekte schnell und kontinuierlich zu einer Seite des Fördergurtes transportiert. Die Gesamtbreite des Fördergurtes setzt sich demzufolge aus der von den zu spritzenden Gegenständen abhängigen Arbeitsbreite und dem für die Spurbildung des Lackmaterials notwendigen Überstand zusammen. Da die Umlaufrakel dem Obertrum des Fördergurtes zugeordnet ist, lassen sich die zugegebenen Mengen von Lösungsmitteln und/oder der Lackmaterialien gegenüber den vorbekannten Farbspritzanlagen wesentlich reduzieren, da diese Mittel auf der Fördergurtoberfläche von der Umlaufrakel zunächst zurückgehalten und dann sinngemäß gesteuert zu einem Rand transportiert werden. Es wird außerdem durch die Umlaufbewegung der Rakel eine Vermischung der Lösungsmittel mit dem Lackmaterial erreicht, und gleichzeitig ein Trockenlauf der Rakel verhindert. Die geringe Menge von Lösungsmitteln und/oder Lackmaterial ergibt sich auch noch dadurch, daß die besagten Materialien nicht nach unten abfließen können.

Der Fördergurt ist ein hoch belastbares, aus Kunststoff und mit eingelegten Verstärkungen gefertigtes Band, dessen Breite zumindest so groß ist wie die Arbeitsbreite der Farbspritzanlage. Da es hoch belastbar ist, kann die Ringrakel so angestellt werden, daß sich der Fördergurt im Bereich der Ringrakel elastisch verformt, so daß er unter Krafteinwirkung gegen die Arbeitsfläche der Ringrakel gedrückt wird, wodurch sinngemäß der Farb- oder Lackauftrag von der Gurtoberfläche abgeschabt wird. Kleine Feststoffpartikel werden durch die Relativbewegung der bewegten Ringrakel gegenüber dem Fördergurt zur Abnahmeseite transportiert. Die Arbeitsfläche der Ringrakel ist der dem Fördergurt zugewandte, senkrecht oder annähernd senkrecht stehende Randbereich der Ringrakel. Durch die erfindungsgemäße Lösung ergibt sich außerdem eine kurze Rüstzeit bei einem Farbwechsel, da die vor der Rakel sich bildende Lackraupen aufgrund der geringen Farbmenge in äußerst kurzer Zeit von der Fördergurtoberfläche entfernt werden können.

Da die Umlaufrakel in einem, bezogen auf die Länge des Bandförderers geringem Abstand zur Auslaufseite der Spritzkabine angeordnet ist, das Obertrum des Fördergurtes mittels einer im Bereich der Umlaufrakel gelagerten Leitwalze in Richtung zum Untertrum umgelenkt ist und der in Laufrichtung des Fördergurtes gesehen, hinter der Leitwalze liegende Bereich der Umlaufrakel den umgelenkten Bereich der Fördergurtoberfläche kontaktiert, wird durch diese Anordnung die Ringrakel dem Obertrum des Bandförderers zugeordnet, so daß der Abstand zur Spritzkabine verkürzt wird. Dadurch trocknet die auf dem Fördergurt aufgebrachte Farb- oder Lackschicht nicht so stark an, so daß die für die Reinigung sich ergebenden Bedingungen wesentlich günstiger sind. Dadurch läßt sich die Menge des aufzubringenden Lösungsmittels noch zusätzlich verringern. Die Leitwalze zur Umlenkung des Obertrums des Fördergurtes sollte in einem minimalen Abstand zur Auslaufseite der Spritzkabine stehen. Dieser Abstand sollte nur so groß sein, wie es für die konstruktive Gestaltung notwendig ist. Dadurch wird die Reinigung der Oberfläche zum frühest möglichen Zeitpunkt möglich. Zur guten Überschaubarkeit und zur einfachen Wartung ist es zweckmäßig, daß der, in Laufrichtung des Fördergurtes gesehen, zwischen der Leitwalze und der ersten Umlenkrolle fallende Bereich des Obertrums des Fördergurtes gegen die Horizontale unter einem spitzen Winkel steht. Zum Weitertransport der von dem Bandförderer abgegebenen Werkstücke übernehmender, als Horizontalförderer ausgebildeter Austrageförderer zugeordnet ist, dessen, in Durchlaufrichtung der Werkstücke gesehen, vordere Seite an die Leitwalze angrenzt. Zweckmäßigerweise ist dieser Austrageförderer ebenfalls als Bandförderer ausgebildet, der um die, in Durchlaufrichtung der Werkstücke gesehen, hintere Umlenkrolle schwenkbar ist. Dadurch ist es möglich, daß er bei Wartungsarbeiten der Rakeleinrichtung in eine Außerbetriebsstellung geschwenkt werden kann, so daß die Rakeleinrichtung besonders gut zugänglich ist. Die Wartung wird noch vereinfacht, wenn die Rakeleinrichtung um eine zur Leitwalze parallele Horizontalachse schwenkbar ist, so daß die Ringrakel in eine den schrägen Teil des Obertrums des Fördergurtes kontaktierenden Arbeitsstellung bringbar und in eine davon abweichende Wartungsstellung anhebbar ist.

Gemäß einem bevorzugten Ausführungsbeispiel ist vorgesehen, daß die Ringrakel als kreisförmiger, rotierend antreibbarer Ring ausgebildet ist, deren Außendurchmesser der Nutzbreite des Fördergurtes entspricht. Dadurch wird bei einer einzigen Ringrakel die gesamte Arbeitsbreite des Fördergurtes gereinigt. Um diese Reinigungswirkung zu erhöhen ist vorgesehen, daß der Ring an der der Fördergurtoberfläche zugewandten Seite eine umlaufende Rakellippe aufweist. In konstruktiv einfacher Weise wird diese Rakellippe durch ein auf den Ring aufgezogenes oder in eine Nut eingesetztes Stahlband von relativ geringer Dicke gebildet.

Weitere Kennzeichen und Merkmale einer vorteilhaften Ausgestaltung der vorliegenden Erfindung sind Gegenstand von weiteren Unteransprüchen und ergeben sich aus der nachfolgenden Beschreibung bevorzugter Ausführungsbeispiele.

Es zeigen:
- Figur 1: Eine erfindungsgemäße Farbspritzanlage in Seitenansicht, rein schematisch,
- Figur 2: eine erste Ausführungsform der Rakeleinrichtung der erfindungsgemäßen Farbspritzanlage in Draufsicht,
- Figur 3: die Rakeleinrichtung nach der Figur 2 in Seitenansicht und Arbeitsstellung,
- Figur 4: die Rakeleinrichtung nach den Figuren 2 und 3 in einer Wartungsstellung,
- Figur 5: eine zweite Ausführung der Rakeleinrichtung in Draufsicht,
- Figur 6: eine der Figur 5 entsprechende Seitenansicht,
- Figur 7: eine dritte Ausführungsform der Rakeleinrichtung in Draufsicht,
- Figur 8: eine der Figur 7 entsprechende Seitenansicht,
- Figur 9: eine den Rakeleinrichtungen gemäß den Figuren 2 bis 8 nachgeschaltete Zusatzeinrichtung in Draufsicht,
- Figur 10: eine der Figur 9 entsprechende Seitenansicht,
- Figur 11: eine Einzelheit, die elastische Verformung des Fördergurtes zeigend,
- Figur 12: eine Einzelheit, die elastische Verformung des Fördergurtes in einer zweiten Ausführung zeigend,
- Figur 13: eine die Rückgewinnung des Lösungsmittels und des Lackes zeigend, rein schematisch.

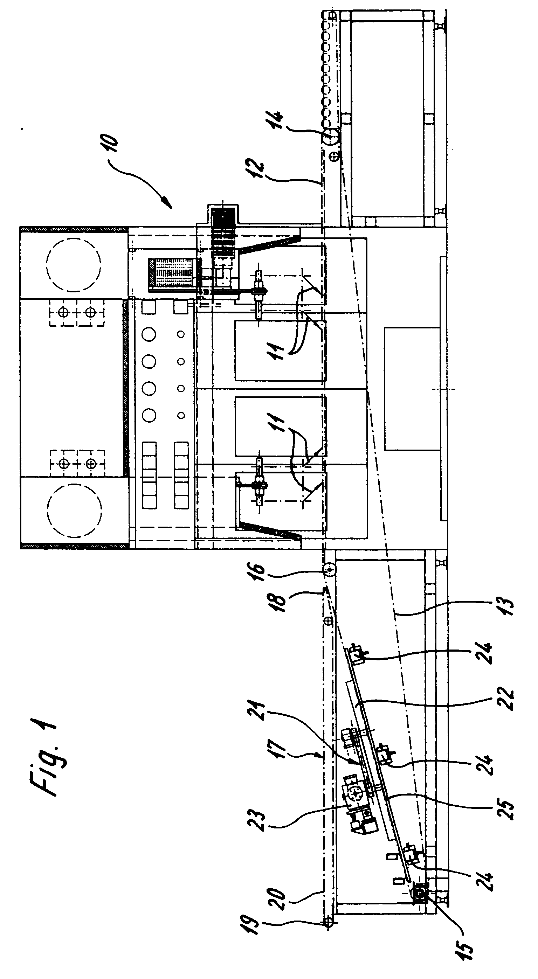

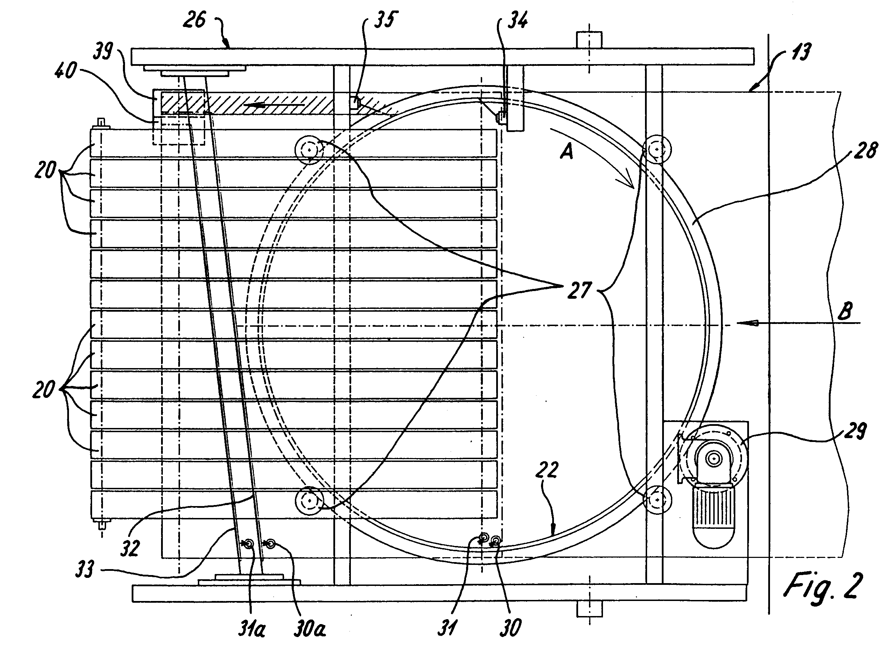

Die in der Fig. 1 schematisch dargestellte Farbspritzanlage beinhaltet eine nicht näher erläuterte Spritzkabine 10, die mit mehreren gesteuerten Spritzpistolen ausgebildet ist. Die Spritzpistolen sind durch die vier schrägstehenden Pfeile 11 schematisch angedeutet. Die Farbspritzanlage ist ferner mit einem andeutungsweise dargestellten Bandförderer 12 ausgerüstet, auf dessen horizontalen Teil des Obertrums die nicht dargestellten Werkstücke, vorzugsweise Möbelteile durch die Spritzkabine 10 transportiert werden. Der Bandförderer besteht im wesentlichen aus einem der Arbeitsbreite der Farbspritzanlage angepaßten Fördergurt 13, der, in Laufrichtung des Fördergurtes 13 gesehen, vorderen Umlenkrolle 14, der hinteren Umlenkrolle 15 und einer das Obertrum des Fördergurtes 13 abgewinkelten Leitwalze 16. Die Leitwalze 16 steht in einem, bezogen auf den Abstand zur vorderen Umlenkrolle 14, geringen Abstand zur Auslaufseite der Spritzkabine 10. Der zwischen der hinteren Umlenkrolle 15 und der Leitwalze 16 fallende Bereich des Obertrums des Fördergurtes 13 ist gegen die Horizontale geneigt. An den horizontalen Teil des Obertrums 12 des des Fördergurtes 13 schließt sich ein weiterer, als Horizontalförderer ausgebildeter Austrageförderer 17 an. Der Austrageförderer 17 besteht im wesentlichen aus einer Antriebsrolle 19 und einer spitzen Messerumlenkung 18 an der der Spritzkabine 10 zugewandten Seite und mehreren im Abstand zueinander laufenden Riemen 20. Zur Reinigung der Oberfläche des Fördergurtes 13 dient eine anhand der Fig. 2 bis 11 noch näher erläuterte Rakeleinrichtung 21, die mit einer umlaufend antreibbaren Ringrakel 22 ausgerüstet ist. Diese Ringrakel 22 wird von einem elektromotorischen Antrieb 23 angetrieben. Im Bereich der Rakeleinrichtung 21 stützt sich der Fördergurt 13 auf einem unterhalb auf Traversen 24 befestigten Stützblech 25 ab.

Die in den Fig. 2 bis 4 dargestellte Rakeleinrichtung 21 ist mit einem nicht näher erläuterten Rahmen 26 ausgerüstet, an dem die Ringrakel 22 drehbar gelagert ist. Die Lagerung erfolgt durch vier um einen Winkel von 90 Grad zueinander versetzte Führungsrollen 27. Bei dieser Ausführung besteht die Ringrakel 22 aus einem kreisförmigen Ring 28. Der Antrieb erfolgt von einem Getriebemotor 29 aus, der einen Reibantrieb bildet. Gemäß der Darstellung nach der Fig. 2 wird der Ring 28 entgegen dem Uhrzeigersinn angetrieben, wie durch den Pfeil A gekennzeichnet. Die Laufrichtung des Fördergurtes 13 ist durch den Pfeil B gekennzeichnet. Im mittleren Bereich des Ringes 28 sind innenseitig zwei in einem geringen Abstand zueinander angeordnete Düsen 30, 31 plaziert. In Laufrichtung B des Fördergurtes 13 gesehen, sind direkt hinter dem Ring 28 zwei parallel zueinander stehende Rakelmesser 32, 33 angeordnet. Die Rakelmesser 32, 33 stehen schräg zur Laufrichtung B des Fördergurtes 13 an der gleichen Seite, an der auch die Düsen 30, 31 montiert sind und jedem Rakelmesser 32, 33 ist jeweils eine Düse 30a und 31a zugeordnet. Wahlweise kann mittels jeder Düse 30, 30a, 31, 31a entweder Lackmaterial oder ein Lösungsmittel gespritzt werden. Die Schrägstellung der Rakelmesser 32, 33 ist so, daß der den Düsen 30a, 31 a gegenüberliegende Stirnendbereich der Rakelmesser 32, 33, bezogen auf die Laufrichtung B des Fördergurtes 13 weiter hinten liegt. Den mittleren Düsen 30, 31 liegt eine Innenrakel 34 gegenüber, die die Innenfläche der Innenrakel 28 und die angrenzende Oberfläche des Fördergurtes 12 abrakelt. An der gleichen Seite ist auch noch eine Außenrakel 35 montiert, die den Ring 28 außen und den angrenzenden Bereich des Fördergurtes 13 abrakelt. In diesem Bereich verformt sich der Fördergurt 13 so, daß sinngemäß eine Rinne gebildet wird, durch die das abgerakelte Lösungsmittel und der abgerakelte Lack bzw. die Farbe abfließen kann. Das zurückgewonnene Lackmaterial legt sich nach Art einer Raupe auf den Rand des Fördergurtes 13, wie durch die Schraffur angedeutet. Durch die beiden schrägstehenden Rakelmesser 32, 33 erfolgt eine Nachreinigung, die auch wie eine Feinstreinigung gesehen werden kann. Ob die beiden Rakelmesser zum Einsatz kommen, hängt von der Art des Lackmaterials ab.

Aus der Fig. 2 ergibt sich, daß das von den beiden Rakelmessern 32, 33 abgerakelte Material durch die Umlaufrichtung B des Fördergurtes 13 wie eine Raupe an der Vorderseite entlanggeschoben wird, so daß es auch an den den Düsen 30a, 31a gegenüberliegenden Rand gelangt.

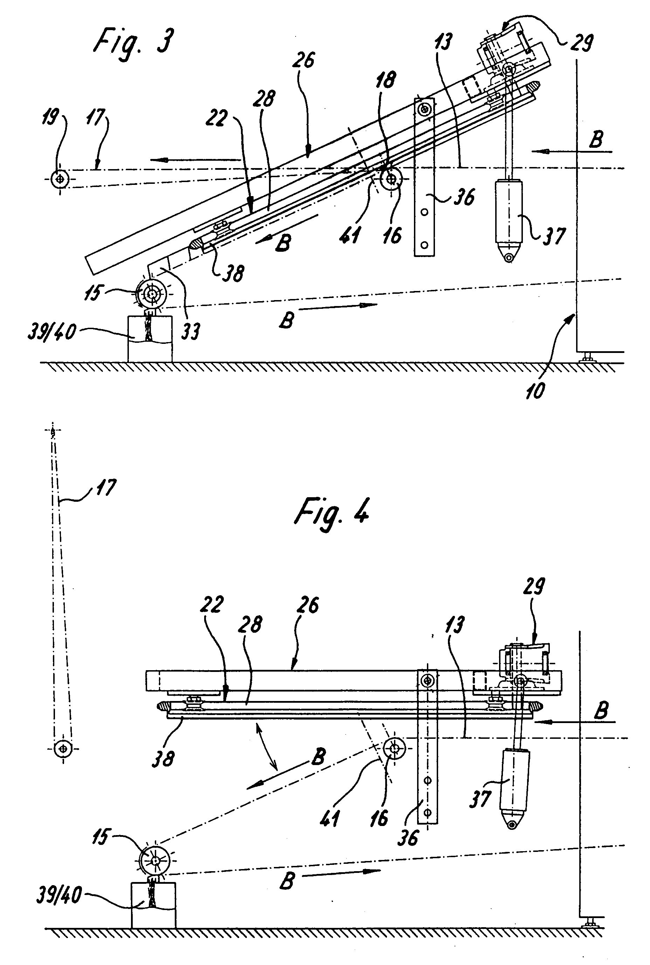

Die Fig. 3 zeigt die Rakeleinrichtung 21 in der Arbeitsstellung. Der Ring 28 ist unter dem gleichen oder annähernd unter dem gleichen Winkel zur Horizontalen geneigt, wie der zwischen der Leitwalze 16 und der hinteren Umlenkrolle 15 verlaufende Teil des Obertrums des Fördergurtes 13. Aus der Fig. ergibt sich in Verbindung mit der Fig. 2, daß der in Laufrichtung des Fördergurtes 13 hintere Halbkreis die wirksame Arbeitsfläche des Ringes 28 ist. Die beiden parallelen Längsholme des Rahmens 26 sind an zwei vertikalen Stützen 36 drehbar gelagert. Die Stützen 36 sind am nicht dargestellten Gestell angeschraubt. Der Drehpunkt des Rahmens 26 und somit der gesamten Rakeleinrichtung 21 liegt oberhalb des Obertrums des Fördergurtes 13. An der der Spritzkabine 10 zugewandten Seite greift an dem Rahmen 26 die Kolbenstange einer Kolbenzylindereinheit 37 an. Diese Kolbenzylindereinheit 37 ist der Schwenkantrieb für den Rahmen 26 bzw. für die Rakeleinrichtung 21. Die Kolbenzylindereinheit 37 ist auch am nicht dargestellten Gestell gelagert.

Die Fig. 3 zeigt, daß in der Betriebsstellung der Rakeleinrichtung 21 der Austrageförderer 17 eine Verlängerung des horizontalen Teils des Obertrums des Fördergurtes 13 ist. Aus den Fig. 3 und 4 geht hervor, daß der Ring 28 an der dem Fördergurt 13 zugewandten Seite eine umlaufende Rakellippe 38 aufweist. Zum Schwenken der Umlaufrakel 22 in die in der Fig. 4 dargestellte Wartungsposition wird die Kolbenstange der Kolbenzylindereinheit 37 eingefahren, so daß die Rakeleinrichtung 21 im Uhrzeigersinn geschwenkt wird, nachdem der Austrageförderer 17 in nicht näher erläuterter Weise entgegen dem Uhrzeigersinn in eine vertikale, aufrechte Position geschwenkt wurde.

Aus der Fig. 2 ergibt sich noch, daß die Arbeitsbreite des Austrageförderers 17 ein klein wenig geringer ist als der Innendurchmesser des Ringes 28, so daß der sich an die Leitwalze 16 des Bandförderers 12 anschließende Bereich in die Ringrakel 28 hineinragt. Dies ist durch die Schrägstellung der Umlaufrakel 22 möglich.

Die Fig. 2 und 3 zeigen außerdem, daß die den Düsen 30a und 31a gegenüberliegenden Stirnenden der beiden Rakelmesser 32, 33 in einem solchen Versatz zueinander stehen, daß der Abstand des in Laufrichtung B des Fördergurtes vorn liegenden Rakelmessers 13 von der Außenkante des Bandförderers geringer ist, als der des Rakelmessers 33. Dadurch besteht die Möglichkeit, daß das Lackmaterial in einen Behälter 39 und das Lösungsmittel in einen Behälter 40 aufgefangen wird. Aus den Fig. ergibt es sich, daß die Umlaufachse der Ringrakel 22 in einem rechten Winkel zum schrägen Teil des Obertrums des Fördergurtes 13 steht. Im dargestellten Ausführungsbeispiel liegt sie innerhalb des schrägen Teils. Durch eine konstruktive Änderung kann sie jedoch auch außerhalb liegen.

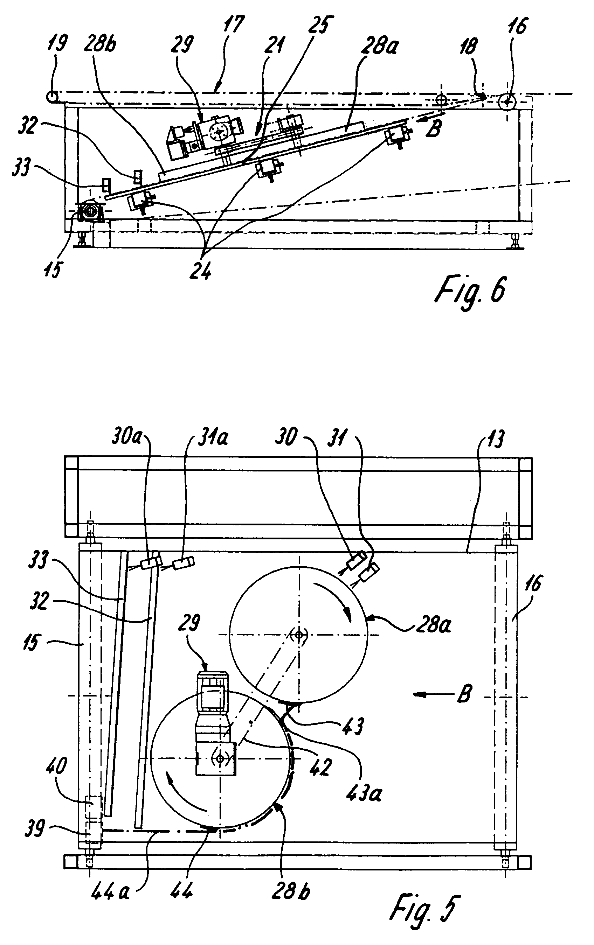

Die in den Fig. 5 und 6 dargestellte Ausführung ist so abgewandelt, daß die Ringrakel 22 aus zwei Ringen 28a, 28b gebildet ist, die so zueinander angeordnet sind, daß auch die gesamte Arbeitsbreite des Fördergurtes 13 erfaßt wird. Die beiden Ringe 28a, 28b werden über eine Kette oder einen Riemen 42 gleichsinnig angetrieben. Der Abstand der beiden Drehachsen ist kleiner als der Außendurchmesser der Ringe 28a oder 28b. Dadurch entsteht im mittleren Bereich des Fördergurtes 13 sinngemäß eine Überlappung, da die Drehachsen der Ringe 28a und 28b, in Laufrichtung des Fördergurtes 13 gesehen, zueinander versetzt sind. Die Anordnung ist wiederum mit den Düsen 30, 30a, 31, 31a zum Aufbringen eines Lösungsmittels oder von Lackmaterial ausgerüstet. Die besagten Düsen stehen ebenfalls im Randbereich des Fördergurtes 13. Der den Düsen 30, 30a, 31a abgewandte Ring 28b steht in Laufrichtung des Fördergurtes 13 nach hinten versetzt zum Ring 28a. An der den Düsen 30, 30a, 31a abgewandten Seite ist jeder Ring 28a, 28b mit einem vertikalen Abstreifer 43, 44 ausgerüstet, um das abgerakelte Material von der Außenfläche des jeweiligen Ringes 28a oder 28b abzuschaben. Durch die Drehrichtung der Ringe 28a, 28b und die Laufrichtung B des Fördergurtes 13 wird das abgerakelte Material wie eine Raupe vor den Umfangsflächen der Ringe 28a, 28b gefördert. Das von dem Ring 28a abgestreifte Material 43a gelangt dann vor den hinteren Ring 28b und dann in Form einer Raupe 44a in den Auffangbehälter 39. Die Zuführung von Lack oder Farbe durch die Düsen 31 bzw. 31a erfolgt, um einen Schmiereffekt zu erzeugen, damit die einander kontaktierenden Flächen nicht beschädigt werden. Das mittels des Rakelmessers 33 noch abgerakelte Material gelangt durch die Schrägstellung in den Auffangbehälter 40. Aus Gründen der vereinfachten Darstellung ist die Schwenkbarkeit der Rakeleinrichtung 21 nicht dargestellt.

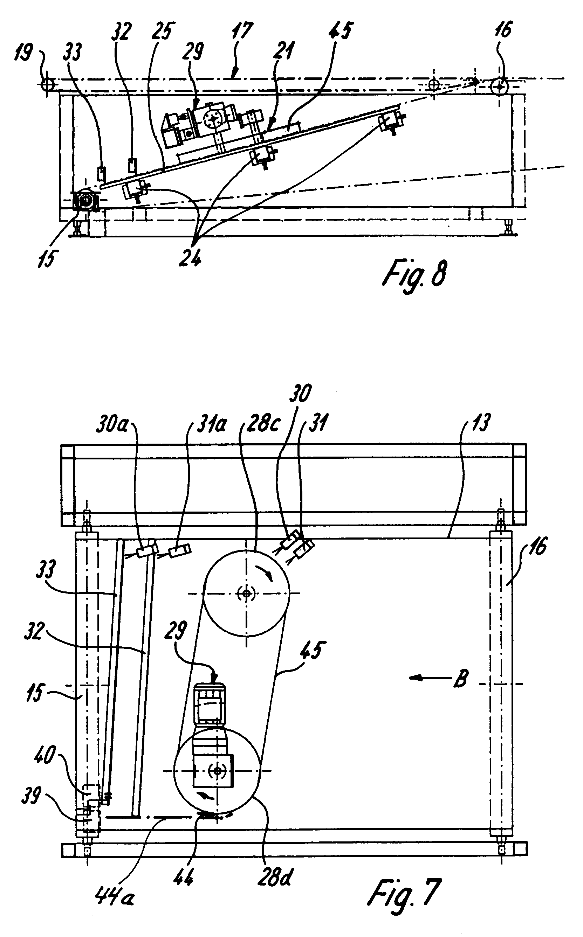

Bei dem Ausführungsbeispiel nach den Fig. 7 und 8 ist die Rakeleinrichtung 21 ebenfalls mit zwei Ringen 28c und 28d ausgerüstet. Die Durchmesser der Ringe 28c oder 28d sind geringer als die Arbeitsbreite des Fördergurtes 13. Die beiden Drehachsen stehen wiederum in einem Versatz zueinander. Damit der Fördergurt 13 seiner ganzen Breite gesäubert wird, ist auf die beiden Ringe 28c, 28d ein Stahlband 45 gezogen. Die untere Kante des Stahlbandes steht gegenüber den dem Förderband 13 zugewandten Stirnflächen der Ringe 28c und 28d vor, so daß nur die Stirnfläche des Stahlbandes 45 die Oberfläche des Fördergurtes 13 kontaktiert. Ansonsten entspricht die Anordnung der in den Fig. 5 und 6 dargestellten Ausführung. Es ist jedoch nur ein Abstreifer 44 erforderlich, der an der den Düsen 30a, 31 und 31a gegenüberliegenden Seite steht. Auch bei dieser Ausführung wird das abgerakelte Material in Form einer Raupe vor dem, in Transportrichtung des Förderbandes 13 gesehen, vorderen Trum des Stahlbandes 45 bewegt. Durch den Abstreifer 44 wird es von der Außenfläche des Stahlbandes 45 abgerakelt und legt sich dann ebenfalls in Form einer Raupe an den Rand des Fördergurtes 13, so daß es dann in dem Behälter 39 aufgefangen wird.

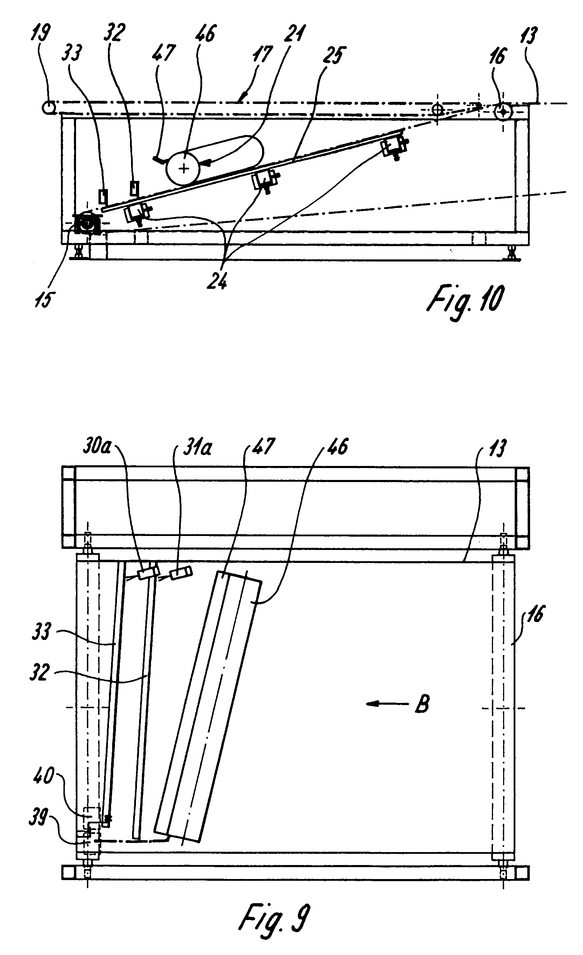

Bei der Ausführung nach den Fig. 9 und 10 ist die Rakeleinrichtung 21 anstelle der Ringrakel 22 durch eine Rakelwalze 46 ersetzt. Die Rakelwalze 46 kontaktiert wiederum die Oberfläche des Fördergurtes 13. Sie ist zwischen der hinteren Umlenkrolle 15 und der Leitwalze 16, also in dem schrägverlaufenden Obertrum des Fördergurtes 13 gelagert. Die Drehachse steht ebenfalls schräg zu den Längskanten des Fördergurtes 13 und zwar so, daß das den Düsen 30a, 31a abgewandte Stirnende der Rakelwalze 46, in Laufrichtung des Fördergurtes 13 gesehen, weiter hinten liegt. Die Schrägstellung ist also mit denen der Ringe 28a bis 28d vergleichbar. Die Drehrichtung der Rakelwalze 46 ist gegenläufig zu der Drehrichtung der Leitwalze 16 und der hinteren Umlenkrolle 13. Das von der Rakelwalze 46 aufgenommene Material wird durch ein an die Rakelwalze 46 angestelltes Rakelmesser 47 abgenommen. Diese Ausführung nach den Fig. 9 und 10 ist besonders dann einzusetzen, wenn die Reinigung aufgrund der verwendeten Farbe oder des verwendeten Lackes besonders einfach ist. Auch bei dieser Ausführung wird das abgerakelte Material in Folge der Schwerkraft wegen des Gefälles in Form einer Raupe an den den Düsen 30a, 31a gegenüberliegenden Rand des Fördergurtes 13 gebracht, wo es dann wiederum in den Behälter 39 gelangt.

Bei den Ausführungen gemäß den Fig. 2 bis 10 können die beiden Rakelmesser 32, 33 als eine Feinst- oder Nachreinigung angesehen werden. Es sei noch erwähnt, daß auch bei der Ausführung nach den Fig. 5 und 6 die Ringe 28a, 28b mit einem Stahlband umreift werden können, dessen untere, dem Fördergurt 13 zugewandte Fläche gegenüber der Stirnfläche des jeweiligen Ringes 28a oder 28b vorsteht.

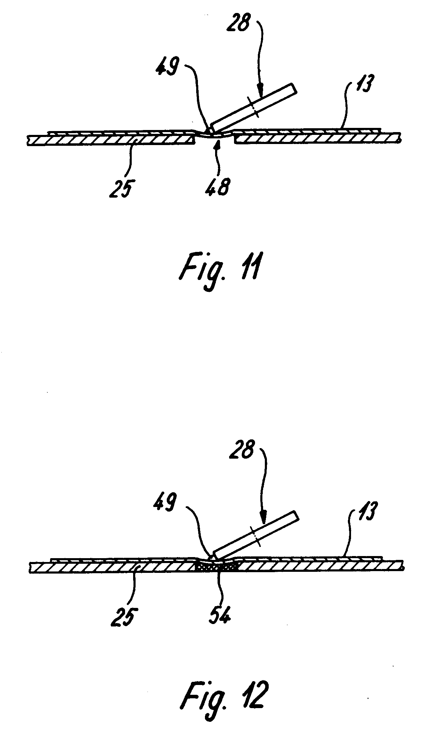

Die Fig. 11 und 12 zeigen, daß das Stützblech 25 im Bereich des Kontaktes mit dem Ring 28 einen Schlitz 48 aufweist, so daß durch die leichte Schrägstellung des Ringes 28 der Fördergurt elastisch verformt wird, so daß der den Ring 28 kontaktierende Bereich des Fördergurtes 13 unter Spannung an dem Ring 28 anliegt. In der sich bildenden Vertiefung bildet sich die Lackspur 49, die gemäß der Aufgabenstellung vom Fördergurt entfernt werden soll. Aus Darstellungsgründen ist der Neigungswinkel größer gewählt als in der praxisgerechten Ausführung.

Bei der Ausführung nach der Fig. 12 ist der Schlitz 48 zur Erhöhung des Widerstandes für die Ringrakel 22 mit einem Füllstoff 54 ausgefüllt, wodurch außerdem die Dichtigkeit zwischen der Ringrakel 22 und dem Fördergurt erhöht wird.

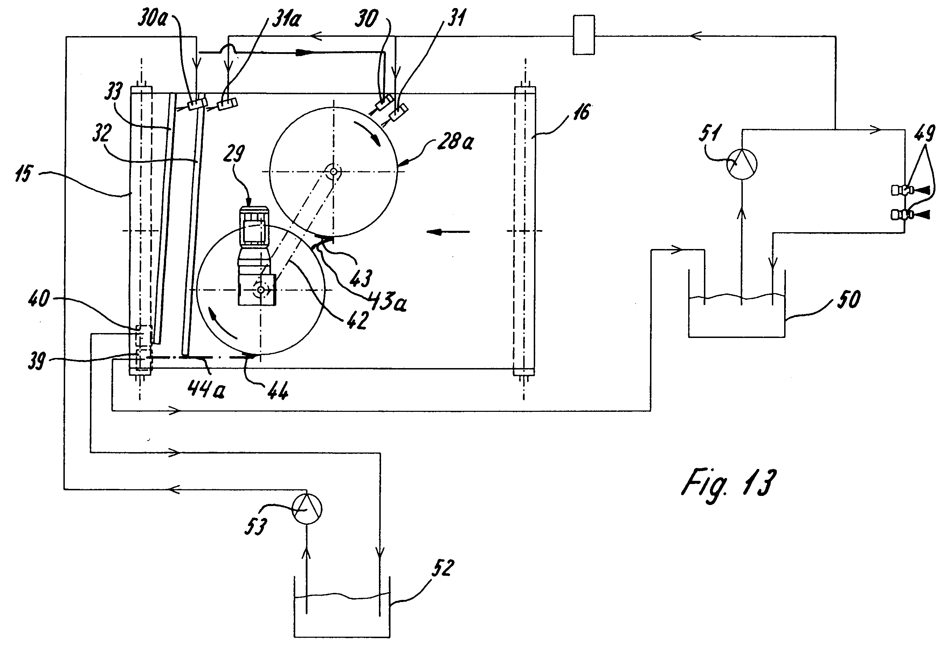

Anhand der Fig. 13 wird der Umlauf der Farbe bzw. des Lackes und des Lösungsmittels anhand der in den Fig. 5 und 6 dargestellten Ausführung erläutert. Die Spritzpistolen in der Spritzkabine 10 sind durch das Bezugszeichen 49 gekennzeichnet. Der Lack bzw. die Farbe wird aus einem Vorratsbehälter 50 entnommen. Die überschüssige Farbe wird in den Vorratsbehälter 50 zurückgefördert. Der Kreislauf der Farbe bzw. des Lackes erfolgt durch eine in der Zuführleitung installierte Pumpe 51. Von der Zulaufleitung 51 zweigt ein weiteres Leitungssystem ab, welches die leitende Verbindung mit den Düsen 31 und 31a für das Aufspritzen von Lack oder Farbe im Bereich der Rakeleinrichtung 21 auf die Oberfläche des Fördergurtes 13 ermöglicht.

Aus der Fig. 12 ergibt sich ferner, daß die im Behälter 39 aufgefangene Farbe in den Vorratsbehälter 50 zurückgepumpt wird. Die Anlage ist ferner noch mit einem Vorratsbehälter 52 für ein Lösungsmittel ausgerüstet. Über ein Leitungssystem und einer darin installierten Pumpe 53 wird das Lösungsmittel den Düsen 30 und 30a zugeführt. Das von der Oberfläche des Fördergurtes 13 zurückgewonnene Lösungsmittel gelangt in den Behälter 40. Die Rückführung in den Vorratsbehälter 52 erfolgt ebenfalls über ein Leitungssystem.

## Patentansprüche

1. Farbspritzanlage mit mehreren in einer im wesentlichen geschlossenen Spritzkabine (10) angeordneten Farbspritzpistolen, mit einem mit einem umlaufend antreibbaren Fördergurt (13) ausgerüsteten Bandförderer (12) zum Transport der zu spritzenden Werkstücke und mit einer die Oberfläche des Fördergurtes (13) kontaktierenden, sich über die Arbeitsbreite des Fördergurtes (13) erstreckenden Rakeleinrichtung (21) zum Reinigen der Fördergurtoberfläche **dadurch gekennzeichnet, daß** die Rakeleinrichtung (21) als rotierend antreibbare, dem Obertrum des Fördergurtes zugeordnete Ringrakel (22) ausgebildet ist, daß die Drehachse der Ringrakel (22) lotrecht zur Fördergurtoberfläche oder in einem relativ kleinen spitzen Winkel zum auf die Fördergurtoberfläche gerichteten Lot geht, so daß zumindest ein Teil der der Fördergurtoberfläche zugewandten Arbeitsfläche der Ringrakel (22) die Fördergurtoberfläche kontaktiert, daß die Ringrakel (22) in einem, bezogen auf die Länge des Bandförderers (12), geringen Abstand zur Auslaufseite der Spritzkabine (10) angeordnet ist, daß das Obertrum des Fördergurtes (13) mittels einer im Bereich der Ringrakel (22) gelagerten Leitwalze (16) in Richtung zum Untertrum umgelenkt ist, und daß der, in Laufrichtung des Fördergurtes (13) gesehen, hinter der Leitwalze (16) liegende Bereich der Ringrakel (22) den umgelenkten Bereich der Fördergurtoberfläche kontaktiert.

2. Farbspritzanlage nach Anspruch 1, **dadurch gekennzeichnet, daß** der, in Laufrichrichtung des Fördergurtes (13) gesehen, zwischen der Leitwalze (16) und der ersten Umlenkrolle (15) fallende Bereich des Obertrums des Fördergurtes (13) gegen die Horizontale unter einem spitzen Winkel steht, und daß die Leitwalze (16) im Bereich der Auslaufseite der Spritzkabine (10) oder, bezogen auf die Länge der Ringrakel (22), in einem geringen Abstand dazu steht.

3. Farbspritzanlage nach Anspruch 1 oder 2, **dadurch gekennzeichnet, daß** dem Bandförderer (12) ein die Werkstücke übernehmender, als Horizontalförderer ausgebildeter Austrageförderer (17) zugeordnet ist, dessen, in Durchlaufrichtung der Werkstücke gesehen, vordere Seite an die Leitwalze (16) angrenzt.

4. Farbspritzanlage nach Anspruch 3, **dadurch gekennzeichnet, daß** der Austrageförderer (17) als Bandförderer ausgebildet ist, und daß dieser um die, in Durchlaufrichtung der Werkstücke gesehen, hintere Umlenkrolle (19) schwenkbar ist.

5. Farbspritzanlage nach einem oder mehreren der vorhergehenden Ansprüche 1 bis 4, **dadurch gekennzeichnet, daß** die Rakeleinrichtung (21) um eine zur Leitwalze (16) parallele Horizontalachse schwenkbar ist, so daß die Ringrakel (22) in eine den schrägen Teil des Obertrums des Fördergurtes (13) kontaktierende Arbeitsstellung bringbar und in eine davon abweichende Wartungsstellung anhebbar ist.

6. Farbspritzanlage nach Anspruch 1, **dadurch gekennzeichnet, daß** die Ringrakel (22) einen rotierend antreibbaren Ring (28) beinhaltet, dessen Außendurchmesser der Breite des Fördergurtes (13) entspricht oder annähernd entspricht.

7. Farbspritzanlage nach Anspruch 6, **dadurch gekennzeichnet, daß** der Ring (28) an der der Fördergurtoberfläche (13) zugewandten Seite eine umlaufende Rakellippe (38) aufweist.

8. Farbspritzanlage nach Anspruch 7, **dadurch gekennzeichnet, daß** die Rakellippe durch ein auf die Umfangsfläche des Ringes (28) aufgezogenes oder in eine Nut eingesetztes Stahlband (45) gebildet ist.

9. Farbspritzanlage nach Anspruch 6, **dadurch gekennzeichnet, daß** der Ring (28) mittels eines reibschlüssigen Antriebes (29) antreibbar ist und durch mindestens drei Führungsrollen (27) geführt ist.

10. Farbspritzanlage nach Anspruch 6, **dadurch gekennzeichnet, daß** im Bereich des Ringes (28) an einer Seite des Fördergurtes (13) zwei Düsen (30, 31) zum Zuführen von Lack oder Farbe und zum Zuführen eines Lösungsmittels vorgesehen sind, und daß an der gegenüberliegenden Seite eine Innenrakel (34) und eine Außenrakel (35) zum Abstreifen der Innen- und Außenfläche des Ringes (28) vorgesehen sind.

11. Farbspritzanlage nach Anspruch 1, **dadurch gekennzeichnet, daß** die Ringrakel (22) aus zwei gleichsinnig rotierend antreibbaren Ringen (28a, 28b, 28c, 28d) besteht, und daß die Drehachsen der Ringe (28a bis 28d) in Laufrichtung B des Fördergurtes (13) zueinander versetzt stehen.

12. Farbspritzanlage nach Anspruch 11, **dadurch gekennzeichnet, daß** der Außendurchmesser jedes Ringes (28a, 28b) größer ist als die halbe Arbeitsbreite des Fördergurtes (13), und daß der Abstand der beiden Drehachsen der Ringe (28a, 28b) kleiner ist als der Außendurchmesser eines Ringes (28a oder 28b), so daß sich die Ringe (28a, 28b) im mittleren Bereich segmentartig überlappen.

13. Farbspritzanlage nach Anspruch 11, **dadurch gekennzeichnet, daß** der Durchmesser jedes Ringes (28c, 28d) kleiner ist als die halbe Arbeitsbreite des Fördergurtes (13), und daß beide Ringe (28c, 28d) zur Bildung der Ringrakel (22) durch ein aufgezogenes Stahlband (45) gekoppelt sind.

14. Farbspritzanlage nach einem oder mehreren der vorhergehenden Ansprüche 11 bis 13, **dadurch gekennzeichnet, daß** zumindest der den Düsen (30, 30a, 31, 31a) abgewandte Ring (28) mit einem Abstreifer (44) ausgerüstet ist.

15. Farbspritzanlage nach Anspruch 1, **dadurch gekennzeichnet, daß** der Ringrakel (22) mindestens ein Rakelmesser (32) zugeordnet ist, welches, bezogen auf die Laufrichtung des Fördergurtes (13), hinter der Ringrakel (22) angeordnet ist.

16. Farbspritzanlage nach Anspruch 15, **dadurch gekennzeichnet, daß** der Ringrakel (22) zwei im Abstand zueinander angeordnete Rakelmesser (32, 33) zugeordnet sind, daß jedem Rakelmesser (32) eine Spritzdüse (30a, 31a) zugeordnet ist, und daß die den Düsen (30a, 31a) gegenüberliegenden Stirnflächen der Rakelmesser (32, 33) gegeneinander versetzt stehen.

17. Farbspritzanlage nach Anspruch 16, **dadurch gekennzeichnet, daß** das Stirnende des, in Laufrichtung B des Fördergurtes (13) gesehen, hinteren Rakelmesser (33) gegenüber dem Stirnende des vorderen Rakelmessers (32) in Richtung zu den Düsen (30a, 31) versetzt ist.

18. Farbspritzanlage mit mehreren in einer im wesentlichen geschlossenen Spritzkabine (10) angeordneten Farbspritzpistolen, mit einem mit einem umlaufend antreibbaren Fördergurt (13) ausgerüsteten Bandförderer (12) zum Transport der zu spritzenden Werkstücke, mit einer die Oberfläche des Fördergurtes (13) kontaktierenden, sich über die Arbeitsbreite des Fördergurtes erstreckenden Rakeleinrichtung (21) zum Reinigen der Fördergurtoberfläche, wobei die Rakeleinrichtung (21) im wesentlichen aus einer die Oberfläche des Fördergurtes (13) kontaktierenden Rakelwalze (46) ausgebildet ist, **dadurch gekennzeichnet, daß** das Obertrum des Fördergurtes (13) mittels einer im Bereich der Ausgangsseite der Spritzkabine (10) gelagerten Leitwalze (16) in Richtung zum Untertrum umgelenkt ist, und daß die Rakelwalze (46) im Bereich zwischen dieser Leitwalze (16) und der hinteren Umlenkrolle (15) des Bandförderers (12) gelagert ist.

19. Farbspritzanlage nach Anspruch 18, **dadurch gekennzeichnet, daß** die Rakelwalze (46) entgegen der Drehrichtung der Leitwalze (16) bzw. der hinteren Umlenkrolle (15) des Bandförderers (12) antreibbar ist.

20. Farbspritzanlage nach Anspruch 18, **dadurch gekennzeichnet, daß** die Rakelwalze (46) gegenüber den Längskanten des Fördergurtes (13) in einer Schrägstellung steht.

21. Farbspritzanlage nach Anspruch 18, **dadurch gekennzeichnet, daß** der Rakelwalze (46) ein sich über seine Länge erstreckendes Rakelmesser (47) zugeordnet ist.

22. Farbspritzanlage nach Anspruch 18, **dadurch gekennzeichnet, daß** der Rakelwalze (46) zwei in gleicher Richtung schrägstehende Rakelmesser (32, 33) zugeordnet sind, daß jedem Rakelmesser an einem Stirnende eine Düse (30a, 31a) zugeordnet ist, und daß das Stirnende des, in Laufrichtung B des Fördergurtes (13) gesehen, hinteren Rakelmessers (13) gegenüber dem Stirnende des vorderen Rakelmessers (32) in Richtung zu den Düsen (30a, 31a) versetzt ist.

23. Farbspritzanlage nach einem oder mehreren der vorhergehenden Ansprüche 1 bis 22, **dadurch gekennzeichnet, daß** der Fördergurt (13) des Bandförderers (12) im Bereich der Rakeleinrichtung (21) auf einem Stützblech (25) aufliegt.

24. Farbspritzanlage nach Anspruch 23, **dadurch gekennzeichnet, daß** das Stützblech (25) im Kontaktbereich der Rakeleinrichtung (21) mit dem Fördergurt (13) mit einer Ausnehmung (48) versehen ist.

25. Farbspritzanlage nach Anspruch 24, **dadurch gekennzeichnet, daß** der Bereich der Ausnehmung (48) mit einem elastisch verformbaren Füllstoff versehen ist.

26. Farbspritzanlage nach einem oder mehreren der vorhergehenden Ansprüche 1 bis 25, **dadurch gekennzeichnet, daß** die Düsen (31, 31a) zum Aufsprühen von Lack oder Farbe mittels eines Leitungssystems an das die Spritzpistolen (49) der Spritzkabine (10) besorgende Leitungssystem strömungstechnisch verbunden sind.

27. Farbspritzanlage nach einem oder mehreren der vorhergehenden Ansprüche 1 bis 25, **dadurch gekennzeichnet, daß** die ein Lösungsmittel versprühenden Düsen (30, 30a) mittels eines Leitungssystems mit einem Vorratsbehälter (52) verbunden sind, und daß das mittels des hinteren Rakelmessers (33) in einem Behälter aufgefangene Lösungsmittel in den Vorratsbehälter (52) mittels einer verbindenden Leitung rückgeführt wird.

## Claims

1. A paint spraying installation comprising a plurality of paint spray guns arranged in a substantially closed spray cubicle (10), a belt conveyor (12) provided with a conveyor belt member (13) which is drivable with a circulatory movement, for transportation of the workpieces to be sprayed, and a wiper device (21) which contacts the surface of the conveyor belt member (13) and which extends over the working width of the conveyor belt member (13), for cleaning the conveyor belt member surface, characterised in that the wiper device (21) is in the form of a rotatably drivable ring wiper (22) associated with the top run of the conveyor belt member, that the axis of rotation of the ring wiper (22) is perpendicular to the conveyor belt member surface or is at a relatively small acute angle relative to the perpendicular to the conveyor belt member surface, so that at least a part of the working surface of the ring wiper (22), which is towards the conveyor belt member surface, contacts the conveyor belt surface, that the ring wiper (22) is arranged at a spacing relative to the exit side of the spray cubicle (10), which spacing is short with respect to the length of the belt conveyor (12), that the top run of the conveyor belt member (13) is diverted in a direction towards the bottom run by means of a guide roller (16) mounted in the region of the ring wiper (22), and that the region of the ring wiper (22), which is downstream of the guide roller (16) as viewed in the direction of travel of the conveyor belt member (13), contacts the diverted region of the conveyor belt member surface.

2. A paint spraying installation according to claim 1 characterised in that the region of the top run of the conveyor belt member (13), which region falls between the guide roller (16) and the first direction-changing roller (15), as viewed in the direction of travel of the conveyor belt member (13), is at an acute angle relative to the horizontal, and that the guide roller (16) is in the region of the exit side of the spray cubicle (10) or at a small spacing relative thereto with respect to the length of the ring wiper (22).

3. A paint spraying installation according to claim 1 or claim 2 characterised in that associated with the belt conveyor (12) is a discharge conveyor (17) which is in the form of a horizontal conveyor and which takes over the workpieces and whose front side, as viewed in the direction of through-travel of the workpieces, adjoins the guide roller (16).

4. A paint spraying installation according to claim 3 characterised in that the discharge conveyor (17) is in the form of a belt conveyor and that the latter is pivotable about the direction-changing roller (19) which is the downstream roller as viewed in the direction of through-travel of the workpieces.

5. A paint spraying installation according to one or more of preceding claims 1 to 4 characterised in that the wiper device (21) is pivotable about a horizontal axis parallel to the guide roller (16), so that the ring wiper (22) can be moved into a working position of contacting the inclined part of the top run of the conveyor belt member (13) and can be raised into a maintenance position differing therefrom.

6. A paint spraying installation according to claim 1 characterised in that the ring wiper (22) includes a rotatably drivable ring (28) whose outside diameter corresponds or approximately corresponds to the width of the conveyor belt member (13).

7. A paint spraying installation according to claim 6 characterised in that at the side towards the conveyor belt member surface (13) the ring (28) has a peripherally extending wiper lip (38).

8. A paint spraying installation according to claim 7 characterised in that the wiper lip is formed by a steel band (45) which is drawn on to the peripheral surface of the ring (28) or which is fitted into a groove.

9. A paint spraying installation according to claim 6 characterised in that the ring (28) is drivable by means of a frictional drive (29) and is guided by at least three guide rollers (27).

10. A paint spraying installation according to claim 6 characterised in that provided in the region of the ring (28) at one side of the conveyor belt member (13) are two nozzles (30, 31) for the feed of lacquer or paint and for the feed of a solvent and provided at the opposite side are an inner wiper (34) and an outer wiper (35) for wiping off the inner and outer surfaces of the ring (28).

11. A paint spraying installation according to claim 1 characterised in that the ring wiper (22) comprises two rings (28a, 28b, 28c, 28d) which are drivable rotatably in the same direction and that the axes of rotation of the rings (28a to 28d) are displaced relative to each other in the direction of travel B of the conveyor belt member (13).

12. A paint spraying installation according to claim 11 characterised in that the outside diameter of each ring (28a, 28b) is larger than half the working width of the conveyor belt member (13) and that the spacing of the two axes of rotation of the rings (28a, 28b) is smaller than the outside diameter of a ring (28a or 28b) so that the rings (28a, 28b) overlap segment-like in the central region.

13. A paint spraying installation according to claim 11 characterised in that the diameter of each ring (28c, 28d) is smaller than half the working width of the conveyor belt member (13) and that both rings (28c, 28d) are coupled by a steel band (45) fitted thereon to form the ring wiper (22).

14. A paint spraying installation according to one or more of preceding claims 11 to 13 characterised in that at least the ring (28) remote from the nozzles (30, 30a, 31, 31a) is provided with a cleaner member (44).

15. A paint spraying installation according to claim 1 characterised in that associated with the ring wiper (22) is at least one wiper blade (32) which is arranged downstream of the ring wiper (22) with respect to the direction of travel of the conveyor belt member (13).

16. A paint spraying installation according to claim 15 characterised in that two spaced-apart wiper blades (32, 33) are associated with the ring wiper (22), that a spray nozzle (30a, 31a) is associated with each wiper blade (32), and that the end faces of the wiper blades (32, 33) which are disposed opposite the nozzles (30a, 31a) are displaced relative to each other.

17. A paint spraying installation according to claim 16 characterised in that the end of the wiper blade (33) which is the downstream blade as viewed in the direction of travel B of the conveyor belt member (13) is displaced relative to the end of the leading wiper blade (32), in a direction towards the nozzles (30a, 31)

18. A paint spraying installation comprising a plurality of paint spray guns arranged in a substantially closed spray cubicle (10), a belt conveyor (12) provided with a conveyor belt member (13) which is drivable with a circulatory movement, for transportation of the workpieces to be sprayed, and a wiper device (21) which contacts the surface of the conveyor belt member (13) and which extends over the working width of the conveyor belt member (13), for cleaning the conveyor belt member surface, wherein the wiper device (21) is formed substantially from a wiper roller (46) which contacts the surface of the conveyor belt member (13), characterised in that the top run of the conveyor belt member (13) is diverted towards the bottom run by means of a guide roller (16) mounted in the region of the exit side of the spray cubicle (10) and that the wiper roller (46) is mounted in the region between said guide roller (16) and the downstream direction-changing roller (15) of the belt conveyor (12).

19. A paint spraying installation according to claim 18 characterised in that the wiper roller (46) is drivable in opposite relationship to the direction of rotation of the guide roller (16) or the downstream direction-changing roller (15) of the belt conveyor (12).

20. A paint spraying installation according to claim 18 characterised in that the wiper roller (46) is in an inclined position relative to the longitudinal edges of the conveyor belt member (13).

21. A paint spraying installation according to claim 18 characterised in that associated with the wiper roller (46) is a wiper blade (47) extending over the length thereof.

22. A paint spraying installation according to claim 18 characterised in that associated with the wiper roller (46) are two wiper blades (32, 33) which are inclined in the same direction, that a nozzle (30a, 31a) is associated with each wiper blade at one end, and that the end of the wiper blade (13) which is the downstreamblade as viewed in the direction of travel B of the conveyor belt member (13) is displaced relative to the end of the upstream wiper blade (32) towards the nozzles (30a, 31a).

23. A paint spraying installation according to one or more of preceding claims 1 to 22 characterised in that the conveyor belt member (13) of the belt conveyor (12) lies on a support plate (25) in the region of the wiper device (21).

24. A paint spraying installation according to claim 23 characterised in that the support plate (25) is provided with an opening (48) in the contact region of the wiper device (21) with the conveyor belt member (13).

25. A paint spraying installation according to claim 24 characterised in that the region of the opening (48) is provided with an elastically deformable filling material.

26. A paint spraying installation according to one or more of preceding claims 1 to 25 characterised in that the nozzles (31, 31a) for spraying on lacquer or paint are connected in flow communication by means of a conduit system to the conduit system supplying the spray guns (49) of the spray cubicle (10).

27. A paint spraying installation according to one or more of preceding claims 1 to 25 characterised in that the nozzles (30, 30a) for spraying a solvent are connected by means of a conduit system to a supply container (52) and that the solvent which is collected by means of the downstream wiper blade (33) in a container is returned to the supply container (52) by means of a connecting conduit.

## Revendications

1. Installation de pulvérisation de peinture comportant plusieurs pistolets de pulvérisation de peinture, placés dans une cabine de pulvérisation (10), sensiblement fermée, comportant un convoyeur à bande (12), équipé d'une courroie de convoyage (13), pouvant être entrainée en circulation, pour le transport des pièces à peindre par pulvérisation et comportant un dispositif de raclage (21) en contact avec la surface de la courroie de convoyage (13), s'étendant sur la largeur de travail de la courroie de convoyage (13), pour le nettoyage de la surface de la courroie de convoyage, caractérisée en ce que le dispositif de raclage (21) est une racle annulaire (22) pouvant être entraînée en rotation, affectée au brin supérieur de la courroie de convoyage, en ce que l'axe de rotation de la racle annulaire (22) est perpendiculaire à la surface de la courroie de convoyage ou forme un angle aigu relativement petit par rapport à la verticale sur la surface de la courroie de convoyage, de sorte qu'au moins une partie de la surface de travail de la racle annulaire (22), tournée vers la surface de la courroie de convoyage, est en contact avec cette dernière, en ce que la racle annulaire (22) est disposée à une faible distance, par rapport à la longueur du convoyeur à bande (12), du côté de sortie de la cabine de pulvérisation (10), en ce que le brin supérieur de la courroie de convoyage (13) est renvoyé en direction du brin inférieur, au moyen d'un cylindre de guidage (16), monté dans la zone de la racle annulaire (22), et en ce que la zone de la racle annulaire (22), située derrière le cylindre de guidage (16), vu dans le sens de circulation de la courroie de convoyage (13), est en contact avec la zone de changement de direction de la surface de la courroie de convoyage.

2. Installation de pulvérisation de peinture selon la revendication 1, caractérisée en ce que la zone du brin supérieur de la courroie de convoyage (13), se trouvant entre le cylindre de guidage (16) et la première poulie de renvoi (15), vue dans le sens de circulation de la courroie de convoyage (13), forme un angle aigu par rapport à l'horizontale, et en ce que le cylindre de guidage (16) se trouve, dans la zone du côté de sortie de la cabine de pulvérisation (10) ou, par rapport à la longueur de racle annulaire (22), à une faible distance de celle-ci.

3. Installation de pulvérisation de peinture selon la revendication 1 ou 2, caractérisée en ce qu'au convoyeur à bande (12) est associé un convoyeur d'évacuation conformé en convoyeur horizontal, reprenant les pièces, dont le côté avant, vu dans le sens de circulation des pièces, est adjacent au cylindre de guidage (16).

4. Installation de pulvérisation de peinture selon la revendication 3, caractérisée en ce que le convoyeur d'évacuation (17) est conformé en convoyeur à bande, et en ce que celui-ci peut pivoter autour de la poulie de renvoi (19) arrière, vu dans le sens de circulation des pièces.

5. Installation de pulvérisation de peinture selon une ou plusieurs des revendications 1 à 4 précédentes, caractérisée en ce que le dispositif de raclage (21) peut pivoter autour d'un axe horizontal, parallèle au cylindre de guidage (16), de sorte que la racle annulaire (22) peut être amenée dans une position de travail, en contact avec la partie oblique du bras supérieur de la courroie de convoyage (13), et peut être relevée dans une position d'entretien, différente de la position de travail.

6. Installation de pulvérisation de peinture selon la revendication 1, caractérisée en ce que la racle annulaire (22) contient un anneau (28), pouvant être entraîné en rotation, dont le diamètre extérieur correspond à la largeur de la courroie de convoyage (13) ou lui correspond approximativement.

7. Installation de pulvérisation de peinture selon la revendication 6, caractérisée en ce que l'anneau (28) présente une lèvre de raclage (38) périphérique, sur le côté tourné vers la surface (13) de la courroie de convoyage.

8. Installation de pulvérisation de peinture selon la revendication 7, caractérisée en ce que la lèvre de raclage est formée par une bande d'acier (45) enfilée sur la surface périphérique de l'anneau (28) ou insérée dans une rainure.

9. Installation de pulvérisation de peinture selon la revendication 6, caractérisée en ce que l'anneau (26) peut être entraîné au moyen d'un mécanisme d'entraînement (29), par friction, et est guidé par au moins trois rouleaux de guidage (27).

10. Installation de pulvérisation de peinture selon la revendication 6, caractérisée en ce que dans la zone de l'anneau (28), sur un côté de la courroie de convoyage (13), sont prévues deux buses (30, 31) pour l'alimentation en laque ou peinture et pour l'alimentation en un solvant, et en ce que sur le côté opposé sont prévues une racle intérieure (34) et une racle extérieure (35), pour racler la surface intérieure et la surface extérieure de l'anneau (28).

11. Installation de pulvérisation de peinture selon la revendication 1, caractérisée en ce que la racle annulaire (22) est constituée de deux anneaux (28a, 28b, 28c, 28d), pouvant être entraînés en rotation dans le même sens, et en ce que les axes de rotation des anneaux (28a à 28d) sont décalés l'un par rapport à l'autre dans le sens de circulation B de la courroie de convoyage (13).

12. Installation de pulvérisation de peinture selon la revendication 11, caractérisée en ce que le diamètre extérieur de chaque anneau (28a, 28b) est plus grand que la demi-largeur de travail de la courroie de convoyage (13), et en ce que la distance des deux axes de rotation des anneaux (28a, 28b) est inférieure au diamètre extérieur d'un anneau (28a ou 28b), de sorte que les anneaux (28a, 28b) se chevauchent à la manière de segments dans la zone centrale.

13. Installation de pulvérisation de peinture selon la revendication 11, caractérisée en ce que le diamètre de chaque anneau (28c, 28d) est inférieur à la moitié de la largeur de travail de la courroie de convoyage (13), et en ce que les deux anneaux (28c, 28d) sont accouplés par une bande d'acier (45) enfilée dessus, pour former la racle annulaire (22).

14. Installation de pulvérisation de peinture selon une ou plusieurs des revendications 11 a 13 précédentes, caractérisée en ce qu'au moins l'anneau (28), tourné à l'opposé des buses (30, 30a, 31, 31a), est équipé d'un racloir (44).

15. Installation de pulvérisation de peinture selon la revendication 1, caractérisée en ce qu'à la racle annulaire (22) est associée au moins une lame de raclage (32), qui est située derrière la racle annulaire (22), par rapport au sens de circulation de la courroie de convoyage (13).

16. Installation de pulvérisation de peinture selon la revendication 15, caractérisée en ce qu'à la racle annulaire (22) sont associées deux lames de raclage (32, 33), espacées l'une de l'autre, en ce qu'à chaque lame de raclage (32) est associée une buse de pulvérisation (30a, 31a) et en ce que les surfaces frontales des lames de raclage (32, 33), opposées aux buses (30a, 31a), sont décalées l'une par rapport à l'autre.

17. Installation de pulvérisation de peinture selon la revendication 16, caractérisée en ce que l'extrémité frontale de la lame de raclage (33) arrière, vue dans le sens de circulation B de la courroie de convoyage (13), est décalée par rapport à l'extrémité frontale de la lame de raclage (32) avant, en direction des buses (30a, 31).

18. Installation de pulvérisation de peinture comportant plusieurs pistolets de pulvérisation de peinture, placés dans une cabine de pulvérisation (10), sensiblement fermée, comportant un convoyeur à bande (12), équipé d'une courroie de convoyage (13), pouvant être entraînée en circulation, pour le transport des pièces a peindre par pulvérisation et comportant un dispositif de raclage (21) en contact avec la surface de la courroie de convoyage (13), s'étendant sur la largeur de travail de la courroie de convoyage (13), pour le nettoyage de la surface de la courroie de convoyage, le dispositif de raclage (21) étant essentiellement conformé en un cylindre de raclage (46), en contact avec la surface de la courroie de convoyage (13), caractérisée en ce que le brin supérieur de la courroie de convoyage (13) est renvoyé en direction du brin inférieur, au moyen d'un cylindre de guidage (16), monté dans la zone du côté de sortie de la cabine de pulvérisation (10), et en ce que le cylindre de raclage (46) est monté dans la zone comprise entre ce cylindre de guidage (16) et la poulie de renvoi (15) arrière du convoyeur à bande (12).

19. Installation de pulvérisation de peinture selon la revendication 18, caractérisée en ce que le cylindre de raclage (46) peut être entraîné dans le sens contraire au sens de rotation du cylindre de guidage (16) ou de la poulie de renvoi (15) arrière du convoyeur à bande (12).

20. Installation de pulvérisation de peinture selon la revendication 18, caractérisée en ce que le cylindre de raclage (46) se trouve dans une position oblique par rapport aux côtés longitudinaux de la courroie de convoyage (13).

21. Installation de pulvérisation de peinture selon la revendication 18, caractérisée en ce qu'au cylindre de raclage (46) est associée une lame de raclage (47), s'étendant sur sa longueur.

22. Installation de pulvérisation de peinture selon la revendication 18, caractérisée en ce qu'au cylindre de raclage (46) sont associées deux lames de raclage (32, 33), se tenant obliquement dans le même sens, en ce qu'à chaque lame de raclage est associée, à une extrémité frontale, une buse (30a, 31a) et en ce que l'extrémité frontale de la lame de raclage (13) arrière, vue dans le sens de circulation B de la courroie de convoyage (13), est décalée par rapport à l'extrémité frontale de la lame de raclage (32) avant, en direction des buses (30a, 31a).

23. Installation de pulvérisation de peinture selon une ou plusieurs des revendications 1 à 22 précédentes, caractérisée en ce que la courroie de convoyage (13) du convoyeur à bande (12) repose sur une tôle d'appui (25), dans la région du dispositif de raclage (21).

24. Installation de pulvérisation de peinture selon la revendication 23, caractérisée en ce que la tôle d'appui (25) est pourvue d'un évidement (48), dans la zone de contact du dispositif de raclage (21) avec la courroie de convoyage (13).

25. Installation de pulvérisation de peinture selon la revendication 24, caractérisée en ce que la zone de l'évidement (48) est pourvue d'une matière de remplissage déformable élastiquement.

26. Installation de pulvérisation de peinture selon une ou plusieurs des revendications 1 à 25 précédentes, caractérisée en ce que les buses (31, 31a) sont reliées, suivant la technique des fluides, pour la pulvérisation de laque ou de peinture, au moyen d'un système de conduites au système de conduites alimentant les pistolets de pulvérisation (49) de la cabine de pulvérisation (10).

27. Installation de pulvérisation de peinture selon une ou plusieurs des revendications 1 à 25 précédentes, caractérisée en ce que les buses (30, 30a), pulvérisant un solvant, sont reliées à un réservoir (52), au moyen d'un système de conduites, et en ce que le solvant, recueilli dans un récipient, au moyen de la lame de raclage (33) arrière, est renvoyé dans le réservoir (52), au moyen d'une conduite de liaison.
